# EUROPÄISCHE PATENTSCHRIFT

(11) **EP 0 105 399 B1**
(45) Veröffentlichungstag und Bekanntmachung des Hinweises auf die Patenterteilung: **10.06.1987**
(21) Anmeldenummer: 83109250.7
(22) Anmeldetag: 19.09.1983
(51) Int. Cl.: C08L 1/10, C08L 69/00, C08L 1/12, C08L 1/14

(54) **Thermoplastische Formmassen**
Thermoplastic moulding compositions
Compositions de moulage thermoplastiques

(30) Priorität: 02.10.1982 DE 3236521; 19.04.1983 DE 3314188
(43) Veröffentlichungstag der Anmeldung: 18.04.1984
(73) Patentinhaber: BAYER AG, 51368 Leverkusen (DE)
(72) Erfinder: Waniczek, Helmut, Dr., D-5000 Köln 80 (DE); Lindner, Christian, Dr., D-5000 Köln 60 (DE); Süling, Carlhans, Dr., D-5068 Odenthal (DE); Bartl, Herbert, Dr., D-5068 Odenthal (DE); Uerdingen, Walter, Dr., D-5090 Leverkusen 1 (DE)

## Beschreibung

Die Erfindung betrifft thermoplastische Formmassen aus Celluloseester oder Cellulosemischester und in der Polymerkette Carbonatgruppen enthaltenden aliphatischen Polyestern oder Polyethern.

Die erfindungsgemäßen Formmassen zeichnen sich dadurch aus, daß sie im Gegensatz zu anderen Versuchen zur Modifizierung von Celluloseestern in weiten Mischungsbereichen eine hervorragende Mischbarkeit und damit Transparenz aufweisen, die auch bei Lagerung bestehen bleibt. Außerdem weisen Formmassen, die überwiegend aus Celluloseestern bestehen, neben einer ausgezeichneten Transparenz eine unerwartete Schlagzähigkeit, insbesondere bei tiefen Temperaturen, auf, die für viele Anwendungsgebiete notwendig ist.

Gegenstand der Erfindung sind daher thermoplastische Formmassen aus
1. 1-99 Gew.-%, bezogen auf die Summe der Komponenten 1) und 2), wenigstens eines Celluloseesters oder Cellulosemischesters,
2. 99-1 Gew.-%, bezogen auf die Summe der Komponenten 1) und 2), wenigstens eines in der Polymerkette Carbonatgruppen aufweisenden aliphatischen Polyesters oder Polyethers, vorzugsweise mit einem Molekulargewicht von 2 000 - 300 000, vorzugsweise 4 000-200 000, und
3. gegebenenfalls üblichen Hilfs- und Zuschlagstoffen.

Von den erfindungsgemäßen Mischungen bevorzugt sind Mischungen, die sich durch eine hervorragende Schlagzähigkeit auszeichnen und 80-97 Gew.-%, vorzugsweise 85 bis 95 Gew.-% der Komponente 1) und 3-20 Gew.-%, vorzugsweise 5-15 Gew.-% der Komponente 2) enthalten oder sich daraus zusammensetzen.

Weitere bevorzugte Mischungen enthalten 1 bis 50 Gew.-%, vorzugsweise 10-35 Gew.-%, der Komponente 1) und 99-50 Gew.-%, vorzugsweise 90-65 Gew.-%, der Komponente 2), oder bestehen daraus, da sich diese Mischungen durch ihre Transparenz auch bei längerer Lagerung auszeichnen.

Als Celluloseester im Sinne der Erfindung können die bekannten Ester der Cellulose wie z.B. die Ester mit Essigsäure, Propionsäure oder Buttersäure bzw. Mischester der Cellulose mit Essigsäure, Propionsäure oder Buttersäure verwendet werden. Ihr Hydroxylgruppengehalt sollte im Bereich von 0,3 bis 3 Gew.-% und ihre Schmelzviskosität im Bereich von 30 bis 18 000 mPa.s bei 23°C (20 %ig in Aceton/Ethanol 9:1) liegen.

Bevorzugt eingesetzt werden im Sinne der Erfindung Celluloseester aliphatischer Carbonsäuren mit C₁-C₄ ung mit einem Hydroxylgruppengehalt von 0,4 bis 2 Gew.-% und einer Viskosität von 500 bis 10 000 mPa.s (bei 23°C, 20 %ig in Aceton/Ethanol 9:1) und besonders bevorzugt Mischester der Cellulose mit einem Acetylgruppengehalt von 10 bis 32 Gew.-%, einem Butyrylgruppengehalt von 15 bis 40 Gew.-%, einem Hydroxylgruppengehalt von 0,5 bis 1 Gew.-% und einer Viskosität von 5000 bis 10 000 mPa.s (bei 23° C, 20 %ig in Aceton/Ethanol 9:1).

Derartige Celluloseester sind bekannt und z.B. im Kunststoff-Handbuch Band 111, "Abgewandelte Naturstoffe", Carl Hanser Verlag, München 1965, Seiten 201-349 beschrieben. Sie werden durch Veresterung von Cellulose in Essigsäure- oder Methylenchloridlösung mit Essigsäureanhydrid, Propionsäureanhydrid oder Buttersäureanhydrid, deren Gemischen oder mit gemischten Carbonsäureanhydriden hergestellt.

Die relativen Viskositäten (η rel) von 2 %igen Lösungen der verwendeten aliphatischen Celluloseester in Aceton liegen bei 25°C vorzugsweise zwischen 3,5 und 5,0 besonders bevorzugt zwischen 4,0 und 4,5. Selbstverständlich können die im Sinne der Erfindung eingesetzten Celluloseester übliche Zusätze wie Weichmacher, wie z. B. Ester der Phthalsäure wie Dimethylphthalat oder Dibutylphthalat, Campher oder Ethylderivate von Benzol- und Toluolsulfonamiden, weiters flammhemmende Mittel wie z. B. Triphenylphosphat oder Trichlorethylphosphat oder Farbstoffe, enthalten.

Als zweite Polymerkomponente der erfindungsgemäßen Formmassen werden vorzugsweise aliphatische Polyester und/oder Polyethercarbonate der wiederkehrenden Struktureinheit (I) verwendet mit einem mittleren Molekulargewicht von 2 000 - 300 000 / Zahlenmittel: 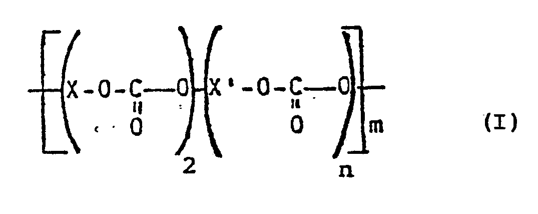 wobei
X' gleiche oder verschiedene aliphatische Polyesterreste mit einem Molekulargewicht von 200 bis 6000, vorzugsweise von 1000 bis 2500, bedeutet,
X = X' oder für gleiche oder verschiedene aliphatische Polyetherreste mit einem Molekulargewicht 200 bis 20000, vorzugsweise 700 bis 10000, besonders bevorzugt 200 bis 1000, bedeutet,
n = 0 oder eine ganze Zahl von 1 bis 20,
m eine ganze Zahl = 20 und
1 eine ganze Zahl von 1 bis 20 bedeutet und eine Grenzviskosität in Tetrahydrofuran [η] 0,5-2,5 9, vorzugsweise 0,8-1,5, aufweisen.

Zur Herstellung der Verbindungen besonders lagerstabiler transparenter Formmassen eignen sich Polyester, bei denen X den Rest eines aliphatischen Polyethers mit einem Molekulargewicht von 200 bis 3500 bedeutet und n und 1 eine ganze Zahl von 10 bis 20 stehen.

Als mehrwertige aliphatische Alkohole für die dem Rest X' zugrunde liegenden Polyester kommen, gegebenenfalls im Gemisch miteinander, z. B. Ethylenglykol, Propylen-glykol-(1,2) und -(1,3), Butylenglykol-(1,4) und -(2,3), Hexandiol-(1,6), Octandiol-(1,8), Neopentylglykol, Cyclohexandimethanol, 1,4-Bis-(hydroxymethylcyclohexan), 2-Methyl-1,3-propandiol, Di-, Tri-, Tetra- und Polyethylenglykol, Di-, Tri-, Tetra-und Polypropylenglykol und Dibutylenglykol in Frage.

Als mehrwertige aliphatische Carbonsäuren für die dem Rest X' zugrunde liegenden Polyester kommen bevorzugt zweiwertige aliphatische Carbonsäuren wie z. B. Kohlensäure, Oxalsäure, Malonsäure, Bernsteinsäure, Adipinsäure, Korksäure, Azelainsäure, Sebazinsäure, Hexahydrophthalsäure, Glutarsäure oder deren Gemische in Frage. Anstelle der freien Carbonsäuren können auch deren Anhydride oder Ester mit niederen Alkoholen eingesetzt werden.

Als Lactone für die dem Rest X' zugrunde liegenden Polyester kommen z. B. γ-Butyrolacton, σ-Valerolacton, ε-Caprolacton, 7-Hydroxyhexansäure-lacton, oder 8-Hydroxyoctansäurelacton in Frage.

Als Hydroxycarbonsäuren für die dem Rest X' zugrunde liegenden Polyester kommen z.B. β-Hydroxypropionsäure, y-Hydroxybuttersäure, β-Hydroxyvaleriansäure, ε-Hydroxycapronsäure, 7-Hydroxyhexansäure oder 2-Hydroxy-methylbenzoesäure oder 4-Hydroxy-cyclohexancarbonsäure in Frage.

Als Polyetherreste X eignen sich vorzugsweise solche der allgemeinen Formel (11) 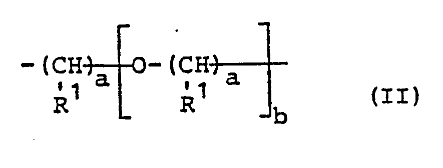 in der die Reste
R¹ jeweils gleich oder verschieden sind und unabhängig voneinander H oder C₁-C₄-Alkylreste, vorzugsweise H oder CH₃, bedeuten,
a eine ganze Zahl von 2 bis 10, vorzugsweise 2 oder 4, darstellt und
b eine ganze Zahl von 2 bis 350, insbesondere von 3 bis 250, bedeutet.

Beispiele dafür sind Poly-(ethylenoxid)-glykole, Poly-(1,2-propylenoxid)-glykole, Poly-(1,3-propylenoxid)-glykole, Poly-(1,2-butylenoxid)-glykole, Poly-(tetrahydrofuran)-glykole, die entsprechenden Poly-(pentylenoxid)-glykole, Poly-(hexamethylenoxid)-glykole, Poly-(heptamethylenoxid)-glykole, Poly-(octamethylenoxid)-glykole, Poly-(monomethylenoxid)-glykole und die Copolymeren oder Blockmischpolymeren aus beispielsweise Ethylenoxid und Propylenoxid.

Die in der Polymerkette Carbonatgruppen enthaltenden Polyester und Polyether werden hergestellt durch Umsetzung der beschriebenen OH-Endgruppen-haltigen Polyester und Polyether mit Kohlensäure-bisarylestern der Formel (lll) 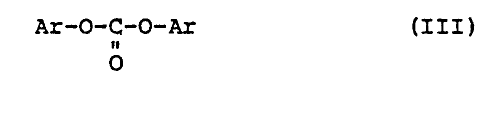 worin

Ar ein substituierter oder unsubstituierter Arylrest mit 6-18 C-Atomen ist, wobei als Substituenten insbesondere C₁-C₄-Alkyle, sowie Nitro- oder Halogengruppen in Frage kommen, oder mit Bis-arylcarbonaten der Formel (IV) 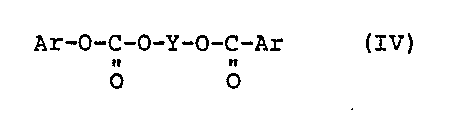 worin
Y die Bedeutung von X und X' in Formel (1) oder eines Carbonatgruppen enthaltenden Polyesters oder Polyethers mit der wiederkehrenden Struktureinheit I hat.

Die Umsetzung wird normalerweise bei Temperaturen von 110 bis 200°C in Gegenwart von Umesterungskatalysatoren wie beispielsweise Alkali- oder Erdalkaliphenolaten, Alkali- oder Erdalkalialkoholaten, tertiären Aminen wie beispielsweise Triethylendiamin, Morpholin, Pyrrolidon, Pyridin, Triethylamin oder Metallverbindungen wie Antimontrioxid, Zinkchlorid, Titantetrachlorid und Titansäuretetrabutylester durchgeführt, wobei der Katalysator in Mengen zwischen 20 ppm und 200 ppm, bezogen auf das Gesamtgewicht der Reaktionskomponenten, eingesetzt wird.

Derartige Umsetzungsprodukte sind bekannt und beispielsweise in DOS 2 732 718 oder in DOS 2 712 435 und DOS 2 651 639 beschrieben.

Die Grenzviskosität [n] wird in Tetrahydrofuran bei 25°C gemessen und ist in dl/g angegeben (Definition siehe H.G. Elias "Makromoleküle", Hüthig & Wepf-Verlag, Basel, S. 265).

Die erfindungsgemäßen Mischungen können hergestellt werden, indem die Celluloseester oder Cellulosemischester mit den Carbonatgruppen enthaltenden Polyestern oder Polyethern, gegebenenfalls unter Zusatz von Stabilisatoren, Weichmachern, Gleitmitteln, Pigmenten, Farbstoffen, Lösungsmitteln oder optischen Aufhellern gemischt werden. Anschließend kann das Gemisch bei Temperaturen bis 200°C auf Walzwerken homogenisiert, als Walzfell abgezogen und zur Weiterverarbeitung zerkleinert werden. Man kann auch in Knetern mischen und das erfindungsgemäße Produkt als Strang oder als beliebig geformte Masse austragen.

Eine besondere Ausführungsform der Erfindung ist das Homogenisieren der Mischungskomponenten auf Ein- oder Zweiwellenmischextrudern mit anschließender Granuliervorrichtung. Dabei ist zu beachten, daß die Extruderwellen so gestaltet sind, daß man gute mechanische Durchmischung erreicht. Der starke weichmachende Effekt der Carbonatgruppen enthaltenden Polyester bewirkt auch, daß die erfindungsgemäßen Formmassen bei verhältnismäßig niedrigen Temperaturen (140 bis 180°C) hergestellt werden können, wodurch man wenig verfärbte Formmassen erhält. Selbstverständlich kann auch bei höheren Temperaturen (180-250°C) gearbeitet werden. Es lassen sich bei dieser Verfahrensweise auch direkt Fertigartikel wie Folien, Stränge oder Spritzgußkörper herstellen.

Die erfindungsgemäßen modifizierten Celluloseester können auch durch Auflösen der Mischungskomponenten in geeigneten Lösungsmitteln oder Lösungsmittelgemischen und anschließendem Verdampfen der Lösungsmittel hergestellt werden. Das Verdampfen des Lösungsmittels kann entweder durch Ausgießen eines Filmes und Abdampfen der flüchtigen Lösungsmittel bei Normaldruck oder Vakuum bei Temperaturen von 0 bis 220°C oder Eindampfen mittels Entgasungsextrudern erfolgen.

Als geeignete Lösungsmittel seien beispielhaft genannt: Ketone wie Aceton, Methylethylketon, Cyclohexanon oder Diethylketon, Ester wie Essigsäuremethylester, Essigsäureethylester oder -butylester oder Ameisensäuremethylester, Ether wie Diethylether, Methyl-, Ethyl- Propyl- oder Butylether des Ethylenglykols oder Diethylenglykols oder Tetrahydrofuran, Amide wie Dimethylformamid oder Diethylformamid, chlorierte Kohlenwasserstoffe wie Dichlormethan, Trichlormethan, Tetrachlormethan, Dichlorethan oder Dichlorethylen oder substituierte oder unsubstituierte aromatische Lösungsmittel wie Benzol, Toluol, Xylol, Chlorbenzol, Dichlorbenzol, Nitrobenzol, Anisol, Phenol oder Kresol.

Die erfindungsgemäßen Formmassen können nach den normalen Methoden der Kunststoffverarbeitung verarbeitet werden, beispielsweise durch Spritzguß, Extrusion oder Hohlkörperblasen.

Ein besonderer Vorzug der erfiridungsgemäßen Formmassen besteht in ihrer vollständigen Transparenz und der hervorragenden Mischbarkeit der Komponenten.

Die erfindungsgemäßen Formmassen lassen sich zur Herstellung von Gebrauchsgegenständen wie Spritzgußartikel für Haushalt und Technik verwenden, für Dichtungen, Folien oder andere Formgegenstände oder optische Artikel, insbesondere Verbundgläser, verarbeiten.

### Beispiele

Herstellung der Carbonatgruppen enthaltenden Polyester und Polyether
A) 1000 Gew.-Teile eines linearen Polyethers aus Ethylenglykoleinheiten mit einem mittleren Molekulargewicht Mn = 608 (bestimmt durch OH-Zahl-Messung), 334,8 Gew.-Teile Diphenylcarbonat und 0,1 Gew.-Teile Natriumphenolat werden 1 Stunde bei Temperaturen zwischen 160 bis 190°C gerührt. Anschließend werden unter einem Vakuum von 1,5 Torr die entstehenden flüchtigen Polykondensationsprodukte, vor allem Phenol, abdestilliert. Unter fortgesetzter Destillation wird die Temperatur für 4 Stunden auf 190°C gesteigert. Man erhält dabei eine zähe, elastische Masse mit einer Grenzviskosität [η], gemessen in Tetrahydrofuran (THF) bei 25°C von 0,238 und einem Molekulargewicht von - 5000 g/Mol (bestimmt durch Dampfdruckosmose).
B) 1000 Gew.-Teile eines linearen Polyethylenglykols mit einem mittleren Molekulargewicht Mn = 608 und einer OH-Zahl von 184, 358 Gew.-Teile Diphenylcarbonat, 0,1 Gew.-Teile Natriumphenolat und 1,2 Gew.-Teile Dilauryldithiopropionat (lrganox® PS 800) werden wie unter Beispiel A) behandelt. Dabei entsteht eine kautschukartige, zähelastische Masse mit einer Grenzviskosität [η] von 0,642 (gemessen in Tetrahydrofuran (THF) bei 25°C).
C) 300 Gew.-Teile eines Polyesterdiols aus Adipinsäure und einer Mischung aus n-Hexan-1,6- diol/Neopentylglykol im Verhältnis 65:35 vom mittleren Molekulargewicht Mn = 2000 (bestimmt durch OH-Zahl-Messung), 700 Gew.-Teile eines linearen Polyethers mit einem mittleren Molekulargewicht Mn = 608 (bestimmt durch OH-Zahl-Messung), 286,4 Gew.-Teile Diphenylcarbonat, 0,1 Gew.-Teiie Natriumphenolat und 1,2 Gew.-Teile lrganox® PS 800 werden 1 Stunde bei 185°C gerührt und anschließend werden binnen 5 Stunden unter einem Vakuum von 1,5 Torr bei 185°C unter Rühren die flüchtigen Kondensationsprodukte, vor allem Phenol, abdestilliert. Das Produkt ist ein hochelastischer Kautschuk mit einer Grenzviskosität [η] von 2,21 (gemessen in THF bei 25°C).
D) 1000 Gew.-Teiie eines Polyesterdiols aus Adipinsäure und einer Mischung aus n-Hexan-1,6- diol/Neopentylglykol im Verhältnis 65:35 vom mittleren Molekulargewicht Mn = 2000, 170 Gew.-Teile Diphenylcarbonat, 0,1 Gew.-Teile Natriumphenolat und 1,2 Gew.-Teile lrganox^{®} PS 800 werden wie die Reaktionskomponenten in Beispiel C) behandelt. Nach der Reaktion wird ein Carbonatgruppen enthaltender Polyester mit einem mittleren Molekulargewicht von Mn = 3600 und einer Grenzviskosität [_{11]} von 0,192 erhalten, der endständige OH-Gruppen enthält.
E) 420,4 Gew.-Teile des Reaktionsproduktes aus Beispiel A) und 123,2 Gew.-Teile des Reaktionsproduktes aus Beispiel D) werden unter Rühren auf 140°C erwärmt. Anschließend wird Vakuum von 0,1 Torr angelegt und unter Rühren und Erwärmen auf 185°C das entstehende Phenol abdestilliert. Nach 4 Stunden Reaktionszeit erhält man einen Carbonatgruppen enthaltenden Polyetherester mit einem mittleren Molekulargewicht Mn = 9300 und einer Grenzviskosität [η] von 0,61, gemessen wie in Beispiel A).
F) 1000 Gew.-Teile eines Polyesterdiols aus Adipinsäure und einer Mischung aus n-Hexan-1,6- diol/Neopentylglykol im Gewichtsverhältnis 65:35 vom mittleren Molekulargewicht Mn = 2000 (bestimmt durch OH-Zahl-Messung), 115,1 Gew.-Teile Diphenylcarbonat und 0,1 Gew.-Teile Natriumphenolat werden bei 150°C unter Stickstoffatmosphäre 1 Stunde gerührt, anschließend wird Vakuum angelegt und die Temperatur auf 185°C gesteigert. Dabei destillieren die flüchtigen Kondensationsprodukte, vor allem Phenol, ab, und das Vakuum kann mit fortlaufender Reaktion auf 0,4 Torr abgesenkt werden. Nach 5 Stunden Reaktionszeit wird mit Stickstoff belüftet. Das Produkt ist eine leicht gelbe kautschukelastische Masse mit einer Grenzviskosität [η] von 1,07 (gemessen in THF bei 25°C).
G) 500 Gew.-Teile eines Polyesterdiols aus Adipinsäure und einer Mischung aus Hexandiol-1,6/Neopentylglykol im Verhältnis 65:35 vom mittleren Molekulargewicht Mn = 20 000, 500 Gew.-Teile eines linearen Polyethers aus Ethylenglykoleinheiten mit einem Molekulargewicht von 608, 238,6 Gew.-Teile Diphenylcarbonat, 0,1 Gew.-Teile Na-Phenolat und 1,2 Gew.-Teile Dilaurylthiodipropionat werden in einem Reaktionsgefäß mit Stickstoff überlagert, auf 180°C unter Rühren erwärmt, anschließend wird 1 Stunde bei 180°C kondensiert und dann die flüchtigen Kondensationsprodukte im Vakuum abdestilliert, indem die Temperatur binnen 1 Stunde auf 190°C gesteigert wird. Das Produkt ist ein festes Wachs mit einer Grenzviskosität [η] von 0,861 (gemessen in THF bei 25°C).
H) 948,5 Gew.-Teile eines linearen Polyethers aus Ethylenglykoleinheiten mit einem mittleren Molekulargewicht Mn = 608, 351 Gew.-Teile Diphenylcarbonat und 0,1 Gew.-Teile Na-Phenolat werden 1 Stunde bei 160 bis 190°C gerührt. Anschließend wird Vakuum von 1,5 Torr angelegt und das entstandene Phenol abdestilliert. Nach 4 Stunden Destillieren entweichen keine flüchtigen Kondensationsprodukte mehr. Das Reaktionsgefäß wird nun mit Stickstoff belüftet und 160 g eines Polyesterdiols aus Adipinsäure und einer Mischung aus Hexandiol-(1,6)/Neopentylglykol im Verhältnis 65:35 vom mittleren Molekulargewicht Mn = 2000 werden dem Ansatz zugegeben. Es wird wieder evakuiert und 3 Stunden bei 190°C das Phenol abdestilliert. Das Produkt ist ein sehr hochviskoses Öl mit einer Grenzviskosität [η] von 0,54 (gemessen in THF bei 25°C).

I) 6716 Gew.-Teile eines Polyesterdiols aus Adipinsäure und einer Mischung aus Hexandiol-1,6/Neopentylglykol im Gewichtsverhältnis 65:35 vom mittleren Molekulargewicht Mn = 2000, 720 Gew.-Teile Diphenylcarbonat und 0,24 Gew.-Teile Natriumphenolat werden in einem mit Stickstoff gefüllten und mit einer Destillationsbrücke versehenen Rührkessel unter Rühren auf 130°C erwärmt. Dann wird der Innendruck des Reaktors abgesenkt, wobei Phenol abdestilliert. Nach 1 Stunde ist ein Druck von 1 mbar erreicht und man erhöht die Temperatur. Nun wird 1 Stunde bei 150°C, 3,5 Stunden bei 175°C und dann 2 Stunden bei 180°C im Vakuum gerührt. Man erhält einen kautschukartigen Kunststoff mit einer Grenzviskosität [η] = 0,99 g dl, gemessen in THF bei 25°C.

### Formmassen

### Beispiele 1-9

Es werden Lösungen der in der Tabelle I angegebenen Zusammensetzung hergestellt, wobei als Celluloseacetat ein Ester der Cellulose mit Essigsäure verstanden wird, der 1,55 Gew.-% Hydroxylgruppen und eine Viskosität von 4200 bis 4400 mPa.s (20 %ig in Aceton/Ethanol 9:1) besitzt.

Aus den Lösungen werden Filme gegossen und nach dem Verdunsten des Lösungsmittels die Transparenz beurteilt (+ = transparent; - = nicht transparent).

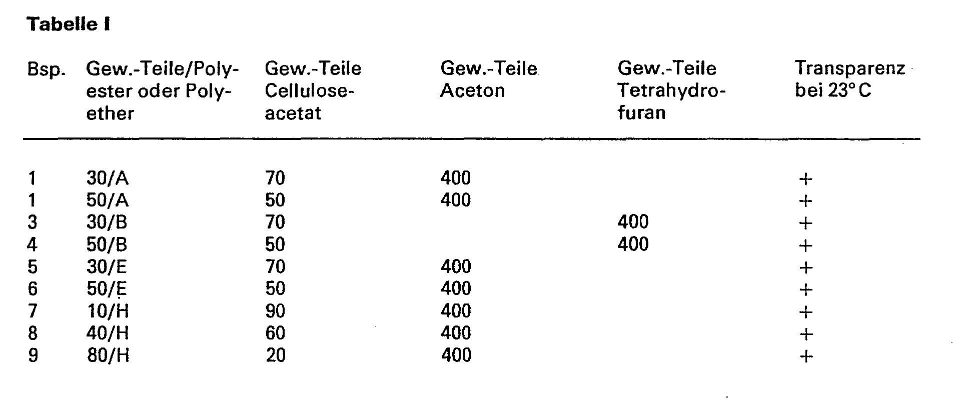

### Beispiele 10-16

Celluloseacetobutyrat (CAB), enthaltend
37 Gew.-% Butyrylgruppen,
15 Gew.-% Acetylgruppen und
0,8 Gew.-% Hydroxylgruppen

wird in den in Tabelle II angegebenen Gewichtsverhältnissen mit einem Carbonatgruppen enthaltenden Polyester F in einem Doppelwellenextruder bei einer Zylindertemperatur von 160° C vermischt und granuliert.

Das Granulat wird anschließend bei einer Massetemperatur von 200°C auf einer Spritzgußmaschine zu Prüfkörpern verspritzt.

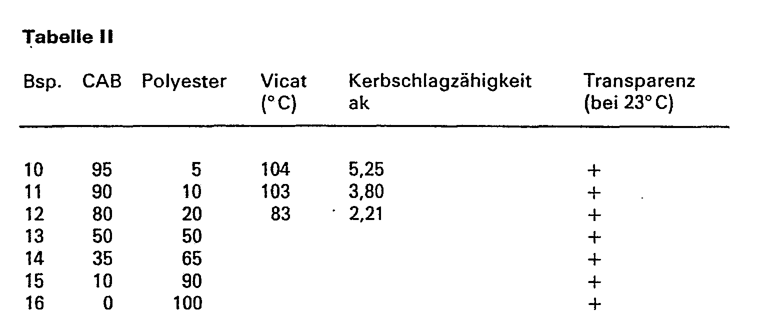

Das Produkt des Beispiels 16 wurde nach 20 Tagen Lagerung bei 23° C trüb. Beispiele 14 und 15 wurden bei -20° C gelagert, wobei nach 40 Tagen keine Trübung zu beobachten war.

### Beispiele 17-19

Celluloseacetobutyrat (CAB), enthaltend
37 Gew.-% Butyrylgruppen,
15 Gew.-% Acetylgruppen und
0,8 Gew.-% Hydroxylgruppen

wird als Lösung in den in Tabelle 111 angegebenen Gewichtsverhältnissen mit einer Lösung des Carbonatgruppen enthaltenden Polyesters C vermischt.

Aus den in der Tabelle 111 angegebenen Lösungen wurden Filme gegossen, deren Transparenz beurteilt wurde.

### Beispiele 20-22

Es werden Lösungen der in der Tabelle 111 angegebenen Zusammensetzung hergestellt, wobei ein Cellulosepropionat mit 49-49,5 Gew.-% Propionylgruppen und 1,6 Gew.-% Hydroxylgruppen und einer Viskosität von 3000 mPa.s (20 %ig in Aceton/Ethanol 9:1) verwendet wird.

Aus den Lösungen werden Filme gegossen und nach dem Verdunsten des Lösungsmittels die Transparenz beurteilt.

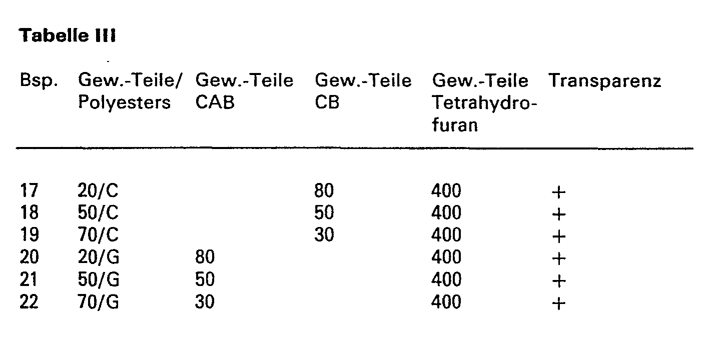

### Beispiele 23-25

Celluloseacetobutyrat mit 42-46 % Buttersäure, 18 bis 21 % Essigsäure und 0,7 bis 1,7 % Hydroxylgruppen (CAB) wird, wie in Tabelle IV angegeben, mit dem Carbonatgruppen enthaltenden Polyester auf einer Walze bei 160°Cvermischt.

Die Walzfelle werden granuliert und anschließend bei einer Massetemperatur von 220°C auf einer Spritzgußmaschine zu Prüfkörpern verspritzt.

### Beispiele 26-28

Cellulosepropionat mit 49 bis 49,5 Gew.-% Propionylgruppen und 1,6 Gew.-% Hydroxylgruppen (CP) wird, wie in der Tabelle IV angegeben, mit dem Carbonatgruppen enthaltenden Polyester auf einer Walze bei 160°C 8 Minuten vermischt.

Die Walzfelle werden granuliert und anschließend bei einer Massetemperatur von 230°C auf einer. Spritzgußmaschine zu Prüfkörpern verspritzt.

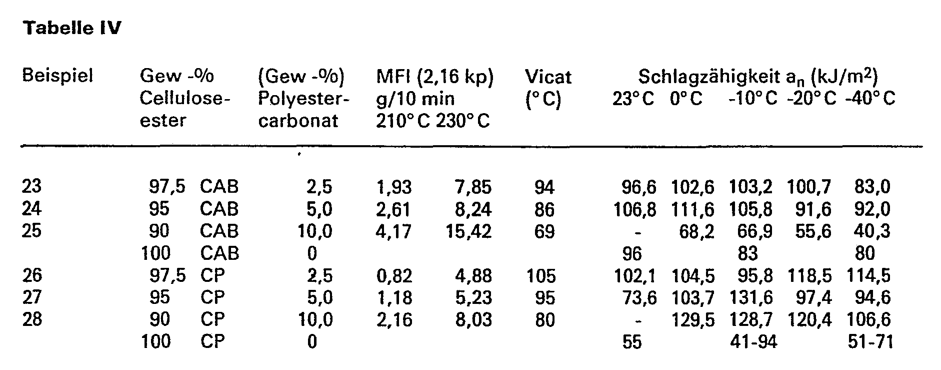

In den Tabellen bedeuten:
aₖ: Schlagzähigkeit nach DIN 53453 Dimension: (kJ/m²)
a_{µ}: Kerbschlagzähigkeit nach DIN 53453 Dimension: (kJ/m²)
Vicat: Vicat-Erweichungstemperatur nach Verfahren B) (Kraft: 49,05 N) nach DIN 53460 Dimension: [°C]

## Patentansprüche

1. Thermoplastische Formassen bestehend aus:
1) 1-99 Gew.-%, bezogen auf die Summe der Komponenten 1) und 2), wenigstens eines Celluloseesters oder Cellulosemischesters;
2) 99-1 Gew.-%, bezogen auf die Summe der Komponenten 1) und 2), eines in der Polymerkette Carbonatgruppen aufweisenden aliphatischen Polyesters oder Polyethers und
3) gegebenenfalls üblichen Hilfs- und Zuschlagstoffen.

2. Formmassen nach Anspruch 1, dadurch gekennzeichnet, daß als Carbonatgruppen enthaltende Polyester oder Polyether Verbindungen mit der wiederkehrenden Struktureinheit 1 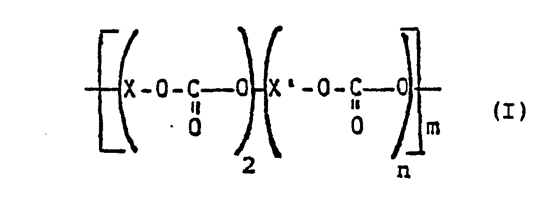 verwendet werden, in der
X' gleiche oder verschiedene Polyesterreste mit einem Molekulargewicht von 200 bis 6000,
X' = X oder gleiche oder verschiedene aliphatische Polyetherreste mit einem Molekulargewicht 200 bis 20000 bedeutet,
n = 0 oder eine ganze Zahl von 1 bis 20 und
m eine ganze Zahl = 20 bedeuten,
1 eine ganze Zahl von 1 bis 20 darstellt, und die Verbindungen eine Grenzviskosität [η] in Tetrahydrofuran von 0,5 bis 2,5 dl bei 25°C aufweisen.

3. Formmassen nach Anspruch 1 oder 2, dadurch gekennzeichnet, daß sie 80 bis 97 Gew.-% der Komponente 1) und 3 bis 20 Gew.-% der Komponente 2) enthalten.

4. Formmassen nach Anspruch 1 bis 3, dadurch gekennzeichnet, daß sie 85 bis 95 Gew.-% der Komponente 1) und 5 bis 15 Gew.-% der Komponente 2) enthalten.

5. Formmassen nach Anspruch 1 oder 2, dadurch gekennzeichnet, daß sie 1 bis 50 Gew.-% der Komponente 1) und 99 bis 50 Gew.-% der Komponente 2) enthalten.

6. Formmassen nach Anspruch 1 oder 2, dadurch gekennzeichnet, daß sie 10 bis 35 Gew.-% der Komponente 1) und 90 bis 65 Gew.-% der Komponente 2) enthalten.

7. Formmassen nach Ansprüchen 2 bis 6, dadurch gekennzeichnet, daß in der allgemeinen Formel (1), der Rest X' ein Molekulargewicht von 1000 bis 2500 und der Rest X ein Molekulargewicht von 200 bis 1000 hat.

## Claims

1. Thermoplastic moulding compositions consisting of:.
1) 1-99 % by weight, based on the sum of components 1) and 2), of at least one cellulose ester or cellulose mixed ester;
2) 99-1 % by weight, based on the sum of components 1) and 2), of an aliphatic polyester or polyether containing carbonate groups in the polymer chain and
3) optionally customary auxiliaries and additives.

2. Moulding compositions according to Claim 1, characterised in that compounds having the recurring structural unit I 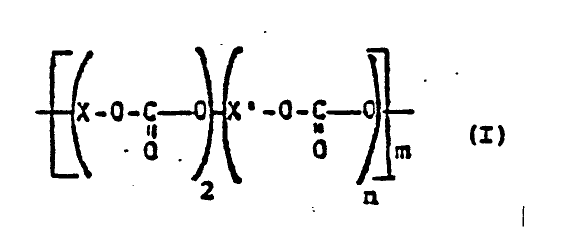 in which
X' denotes identical or differenr polyester radicals having a molecular weight of 200 to 6,000,
X' denotes X or identical or different aliphatic polyether radicals having a molecular weight of 200 to 20,000,
n denotes 0 or an integer from 1 to 20 and
m denotes an integer = 20, and
1 represents an integer from 1 to 20,
are used as the polyesters or polyethers containing carbonate groups, and the compounds have an intrinsic viscosity [η] in tetrahydrofuran of 0.5 to 2.5 dl at 25° C.

3. Moulding compositions according to Claim 1 or 2, characterised in that they contain 80 to 97 % by weight of component 1) and 3 to 20 % by weight of component 2).

4. Moulding compositions according to Claim 1 to 3, characterised in that they contain 85 to 95 % by weight of component 1) and 5 to 15 % by weight of component 2).

5. Moulding compositions according to Claim 1 or 2, characterised in that they contain 1 to 50 % by weight of component 1) and 99 to 50 % by weight of component 2).

6. Moulding compositions according to Claim 1 or 2, characterised in that they contain 10 to 35 % by weight of component 1) and 90 to 65 % by weight of component 2).

7. Moulding compositions according to Claims 2 to 6, characterised in that in the general formula (I) the radical X' has a molecular weight of 1,000 to 2,500 and the radical X has a molecular weight of 200 to 1,000.

## Revendications

1. Matières à mouler thermoplastiques constituées par:
1) 1 à 99 % en poids, par rapport à la somme des constituants 1) et 2), d'au moins un ester cellulosique ou co- ester cellulosique;
2) 99 à 1 % en poids, par rapport à la somme des constituants 1) et 2), d'un polyester ou polyéther aliphatique comportant des groupes carbonate dans la chaîne de polymère et
3) éventuellement les additifs et adjuvants usuels.

2. Matières à mouler selon la revendication 1, caractérisées en ce que l'on emploie comme polyesters ou polyéthers contenant des groupes carbonate des composés avec le motif structural répétitif 1 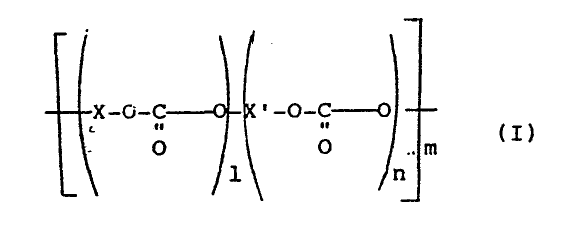
dans lequel
X' représente des restes de polyester identiques ou différents avec une masse moléculaire de 200 à 6000,
X'= X ou représente des restes de polyéther aliphatiques identiques ou différents avec une masse
moléculaire de 200 à 20.000,
n = 0 ou représente un nombre entier de 1 à 20 et
m est un nombre entier = 20,
1 représente un nombre entier de 1 à 20, et les composés présentent une viscosité intrinsèque [η] dans le tétrahydrofuranne de 0,5 à 2,5 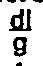 à 25° C.

3. Matières à mouler selon la revendication 1 ou 2, caractérisées en ce qu'elles contiennent 80 à 97 % en poids du constituant 1) et 3 à 20 % en poids du constituant 2).

4. Matières à mouler selon les revendications 1 à 3, caractérisées en ce qu'elles contiennent 85 à 95 % en poids du constituant 1) et 5 à 15 % en poids du constituant 2).

5. Matières à mouler selon la revendication 1 ou 2, caractérisées en ce qu'elles contiennent 1 à 50 % en poids du constituant 1) et 99 à 50 % en poids du constituant 2).

6. Matières à mouler selon la revendication 1 ou 2, caractérisées en ce qu'elles contiennent 10 à 35 % en poids du constituant 1) et 90 à 65 % en poids du constituant 2).

7. Matières à mouler selon les revendications 2 à 6, caractérisées en ce que, dans la formule générale (I), le reste X' possède une masse moléculaire de 1000 à 2500 et que le reste X possède une masse moléculaire de 200 à 1000.
